# EUROPEAN PATENT APPLICATION

(11) **EP 2 778 882 A2**
(43) Date of publication of application: **17.09.2014**
(21) Application number: 14158971.3
(22) Date of filing: 11.03.2014
(51) Int. Cl.: G06F 3/0488

(54) **Gesture control for electronic safety devices**

(30) Priority: 11.03.2013 US 201313794154
(71) Applicant: Code 3, Inc., St. Louis, MO 63114-2029 (US)
(72) Inventor: Bakalor, Joseph, St. Louis, MO 63114-2029 (US); Miller, Roger L., St. Louis, MO 63114-2029 (US)
(74) Representative: Smaggasgale, Gillian Helen

(57) **Abstract**

A touch pad sensor is configured for use by an operator to detect gestures of the operator and for providing a gesture signal indicative of a detected gesture. The detected gesture corresponds to a mode of operation of an electronic safety device. A controller detects the gesture signals indicative of the detected gesture, and converts the gesture signals into control signals to to control the operation of the electronic safety device such as lighting or audio devices.

## Description

### BACKGROUND

The present invention generally relates to a control head for electronic safety devices which includes lighting devices such as emergency lighting (e.g., a light bar) and area lighting (e.g., scene lights) and which includes audio devices such as a siren and a public address (PA) system. The present invention also relates to systems which include such control heads.

Controls for lighting devices and for audio devices include buttons, rotary switches and other control elements which frequency require an operator to visually look at the control head in order to locate the particular button, switch or element the operator intends to engage. When an operator desires to change a mode of operation of the lighting devices and/or the audio devices, the operator frequently looks at the control head to guide their hand to engage a particular button, switch or element to change a mode of operation. Depending on the situation, it may not be convenient or safe for an operator to divert their attention to the control head in order to determine a location of a button, switch or element which the operator intends to engage with their hand.

### SUMMARY

A system for use by an operator including an electronic safety device, a gesture detecting device and a control. The electronic safety device has a control port configured to receive control signals for controlling a mode of operation of the electronic safety device. The gesture detecting device is configured to detect gestures by the operator and is configured to provide a signal corresponding to the gesture. The control is configured to receive the signal and is configured to provide a corresponding control signal to be applied to the control port of the electronic safety device for controlling a mode of operation of the electronic safety device.

A method for use by an operator controls an electronic safety device via detected gestures.

Other objects and features will be in part apparent and in part pointed out hereinafter.

### BRIEF DESCRIPTION OF THE DRAWINGS

Fig. 1 is a block diagram of a system including a touch pad control for a light bar, area light, a siren and/or a PA system.
Fig. 2 is a plan view of a controller of a system including a touch pad control for a light bar and/or a siren.
Fig. 3 illustrates a technique for indicating urgency level 1, urgency level 2 and urgency level 3.
Fig. 4A illustrates an example of a right swipe for indicating that a traffic directing light should enter a mode to direct traffic to the right and Fig. 4B illustrates an example of a left swipe for indicating that a traffic directing light should enter a mode to direct traffic to the left.
Fig. 5 illustrates examples of straight line swipes, each of which may correspond to a different mode of operation.
Fig. 6 illustrates examples of complex and/or multiple line swipes, each of which may correspond to a different mode of operation.
Corresponding reference characters indicate corresponding parts throughout the drawings.

### DETAILED DESCRIPTION

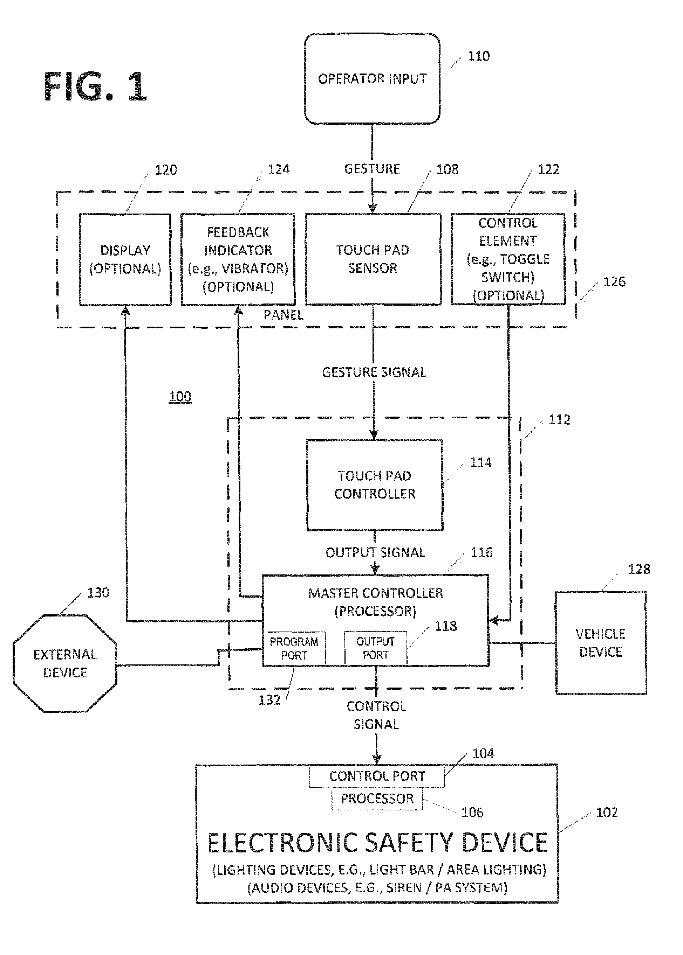

Referring to Fig. 1, a system 100 for use by an operator is illustrated in block diagram form. The system is for use with an electronic safety device 102 having a control port 104 configured to receive control signals for controlling a mode of operation of the electronic safety device102. The system may include the electronic safety device 102.

As used herein, an electronic safety device 102 includes but is not limited to lighting devices such as emergency or warning lighting (e.g., a light bar) and area lighting (e.g., scene lights) and/or a control head for audio devices such as an emergency or warning sound generator, a siren, and a public address (PA) system. As used herein, an electronic safety device 102 includes lighting and sound-based warning products used by professionals in emergency response, utility, service fleet, and industrial settings. As used herein, an electronic safety device 102 includes products that enhance safety for law enforcement officers, firemen and emergency medical technician (EMT) personnel, as well as all personnel in utility, transportation, and construction industries.

Such electronic safety devices 102 include but are not limited to a light bar and/or a siren. Such devices frequently have a processor 106 having the control port 104 configured for receiving digital signals for controlling the mode of operation of the device 102. For example, if the device 102 is a light bar, the digital signals control the mode of operation and particularly the light patterns produced by the light bar. As another example, if the device 102 is a siren, the digital signals control the mode of operation and particularly the sounds produced by the siren.

The system 100 includes a device such as a touch pad sensor 108 configured for detecting operator input 110, such as a gesture by the operator. A gesture includes any type of detectable movement or detectable touch (e.g., physical contact with a sensor) by the operator, such as the examples noted below in more detail. The movement or touch includes movement or touch by the operator or by a physical element (e.g., a stylus or glove) under an operator's control. The touch pad sensor 108 is configured to provide a signal, such as a gesture signal, corresponding to the operator input 110, the detected gesture corresponding to a mode of operation of the electronic safety device 102.

A control 112 is configured for receiving the signal from the touch pad sensor 108 and is configured to provide a corresponding control signal to be applied to the control port 104 of the electronic safety device 102 for controlling the mode of operation of the electronic safety device 102. The controller 112 may include a touch pad controller 114 and a master controller such as a processor 116 having an output port 118 for providing the control signals. For example, the touch sensor 108 and controller 114 may be a Microchip® projected capacitive touch controller model MTCH6301, or equivalent. Other types of pads and controllers may also be used.

The touch pad sensor 108 is configured to detect the gesture signals and is configured to convert the gesture signals into output signals indicative of the detected gesture. The processor 114 is configured to receive the output signals and to convert the output signals into the control signals for controlling the operation of electronic safety device 102.

Thus, the output port 118 of the controller 112 is configured to be connected to the control port 104 of the processor 106 of the light bar/siren device 102. It is also contemplated that the touch pad controller 114 and processor 116 may be a single processor or similar device for generating the control signals in response to the gesture signals.

Thus, the control 112 comprises a controller 114, 116 configured to detect the gesture signals indicative of the detected gesture, and configured to convert the gesture signals into the control signals for controlling the operation of the electronic safety device 102. As a result, the gesture and the control signals implement the mode of operation corresponding to the detected gesture.

As shown in Fig. 1, the output port 118 of the controller 112 is configured to be connected to the control port 104 of the processor 106 of the device 102. This connection may be wired or wireless and it may be direct or indirectly through other devices.

It is also contemplated that the system 100 may include an optional display 120 responsive to the controller 112 and configured to indicate a current status of the electronic safety device 102. As illustrated in Fig. 1, the display 120 may be driven by the processor 116, although in some systems the display 120 may be driven by other components of the controller 112 or by a separate, additional component.

In one form, the display 120 may include a head up display configured to project an image on a surface of a vehicle for indicating the current status of the electronic safety device 102. For example, the head up display may provide a graphic image indicative of the mode of operation of the device 102 or an alpha-numeric message (e.g., "take-down" mode) to indicate to the operator the mode in which the device 102 is operating. In another form, or additionally, the display 120 may include an alpha-numeric display configured to present alpha-numeric characters indicating a current status of the electronic safety device 102.

In one form, the display 120 may include a graphical display configured to present a graphic illustrating the current status of an emergency warning device. For example, the graphical display may be an LCD panel presenting an active, real time image of the mode of operation of the light bar or presenting an image indicative of a sound being produced by the siren.

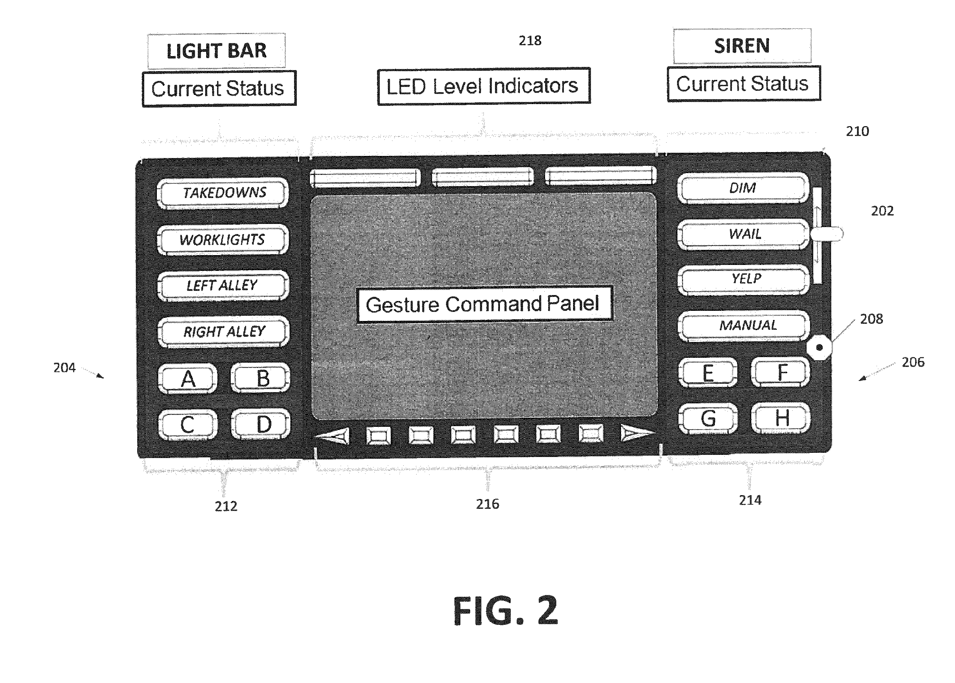

In one form, the display 120 may include a light source configured to indicate the current status of an emergency warning device. For example, the light source may be one or more incandescent or light-emitting diode (LED) lights which, when illuminated, provide an indication to the operator of the current status of the device 100. As a specific example as shown in Fig. 2, an LED may have a lens over it labeled "take-down" and the system would energize the LED when the light bar is operating in a "take-down" mode. As noted below regarding Fig. 2, the light source may provide an indication of a level of urgency of the present mode of operation of the emergency warning device.

It is also contemplated that the system 100 may include an optional control element 124 connected to the controller 112 and configured to control the electronic safety device 102. As illustrated in Fig. 1, the control element 122 may be connected to the processor 116, although in some systems the element 122 may be connected other components of the controller 112 or by a separate, additional component.

In one form, the control element 122 comprises a switch such as a toggle switch 202 illustrated in Fig. 2 and configured to control the emergency warning device. As an example, the toggle switch 202 may be configured to control the siren and its position may slide between positions to implement two or more modes, such as a DIM sound of the siren, a WAIL sound of the siren and a YELP sound of the siren.

In one form, the control element 122 comprises a button configured to control the electronic safety device 102. As an example, as shown in Fig. 2, buttons 204 labeled A, B, C and D may be programmed to control a mode of operation of the light bar and buttons 206 labeled E, F, G, H may be programmed to control a mode of operation of the siren.

In one form, the control element 122 comprises a rotatable element configured to control the electronic safety device 102. For example, as shown in Fig. 2, a knob 208 may be used to control siren volume. Alternatively, as noted herein, the sensor 108 may also be used to control volume.

It is also contemplated that the system 100 may include an optional feedback device 124 connected to the controller 112 and configured to provide an indication to the operator in response to the detected gesture. As illustrated in Fig. 1, the feedback device 124 may be driven by the processor 116, although in some systems the feedback device 124 may be driven by other components of the controller 112 or by a separate, additional component.

In one form, the feedback device 124 comprises an audible sound generator including one or more of a speaker configured to generate sounds indicative of the detected gestures wherein different gestures correspond to different sounds; a solenoid configured to generate a sound (e.g., a click) or a vibration indicative of the detected gesture; and/or a voice generator configured to provide an audible voice indicative of the mode of operation corresponding to each detected gesture.

In one form, the feedback device 124 comprises an visual signal generator including one or more of a head up display projected on a surface of a vehicle configured to generating a display indicative of the detected gesture; an alpha-numeric display configured to generate an alpha-numeric display indicative of the detected gesture wherein different gestures correspond to different alpha-numeric displays; a graphical display configured to provide a graphic indicative of the detected gesture wherein different gestures correspond to different graphics; and/or a light source selectively configured to generate a light signal indicative of the detected gesture wherein different gestures correspond to different light signals. For example, an LED may be located in a vehicle and the controller 112 would illuminate the LED whenever a valid gesture is detected.

In one form, the feedback device 124 comprises a tactile signal generator including one or more of a solenoid configured to generate a movement palpable on the touch pad sensor 108 and indicative of the detected gesture; and/or a vibrating device configured to generate a vibration palpable on the touch pad sensor 108 and indicative of the detected gesture.

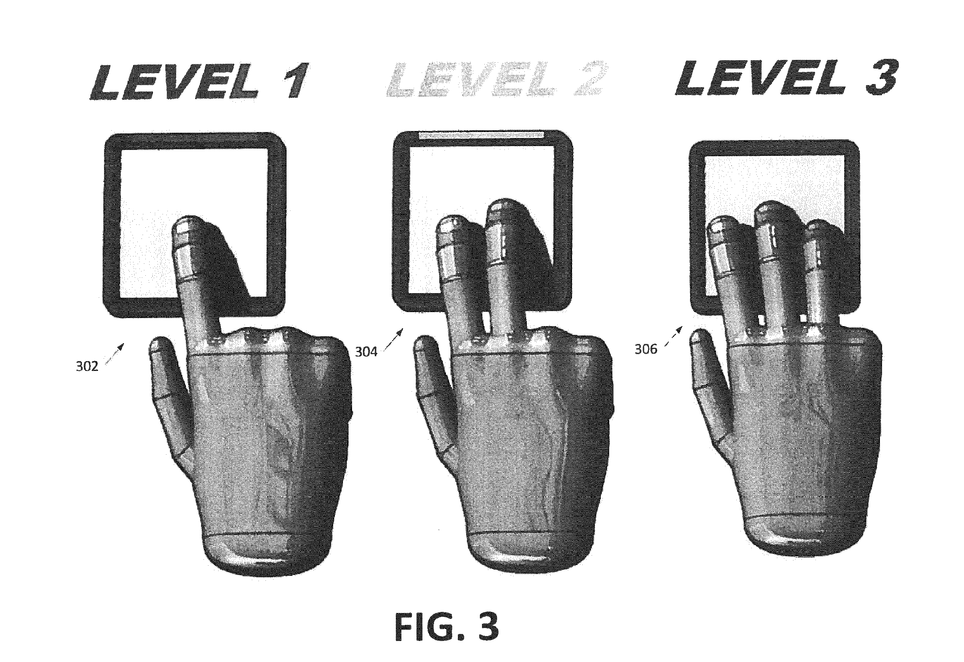

In one form, the touch pad sensor 108 is part of a control head or panel 126. As illustrated in Fig. 2, a control head or panel 210 may include a first display 212 for indicating of a mode of operation of the light bar, and a second display 214 for indicating a mode of operation of the siren. When a traffic directing device such as an ARROWSTIK® is part of the system 100 and/or part of the device 102, the panel 210 may include a third display 216 for indicating the current status of the traffic directing device. Alternatively or in addition, the panel 210 includes a fourth display 218 such as LED level indicators indicative of a level of urgency of the mode of operation of the light bar and/or siren. For example, light bars and/or siren may be programmed to have three levels (or modes) of urgency: low, medium and high. As shown in Fig. 3, each level may be implemented by an operator 110 tapping on the touch pad sensor 108. A single finger tap or touch and hold 302 as shown at the left of Fig. 3 would indicate to the controller 112 that the system should be operated in a level 1 mode. Similarly, a two-finger tap or touch and hold 304 or a three-finger tap or touch and hold 306 as shown at the center and right of Fig. 3 would indicate level 2 or level 3, respectively.

In one form, it is contemplated that the system 100 is configured to be connected to a vehicle device 128 of a vehicle for controlling the vehicle device 128. The controller 112 is configured to detect the gesture signals from the touch pad sensor 108 and is configured to convert the gesture signals into control signals for controlling the operation of the vehicle device 128. Thus, the control signals implement a mode of operation of the vehicle device which corresponds to the detected gesture. For example, the vehicle device 128 may be one or more of a lock (gun, door, K9 door, trunk); a light; an ignition element; a back-up audio warning device (e.g., a beeper), and an accessory (e.g., radar, windshield wipers).

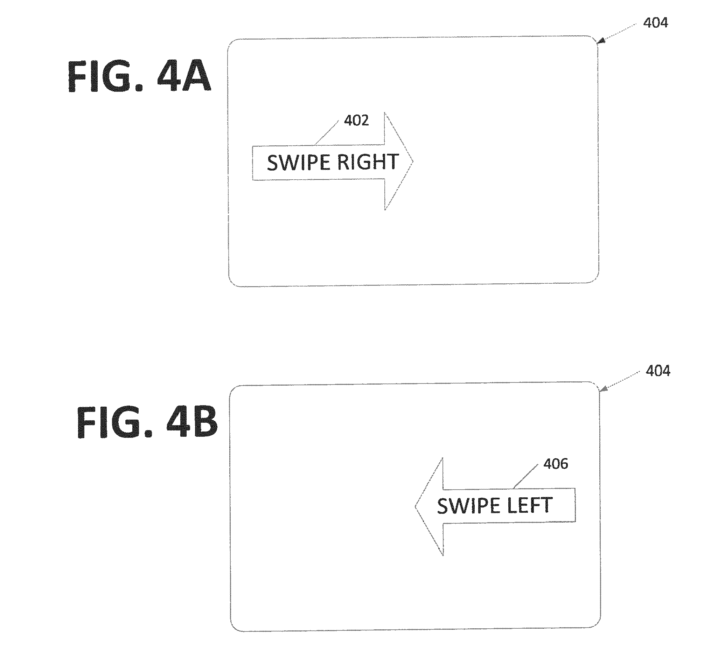

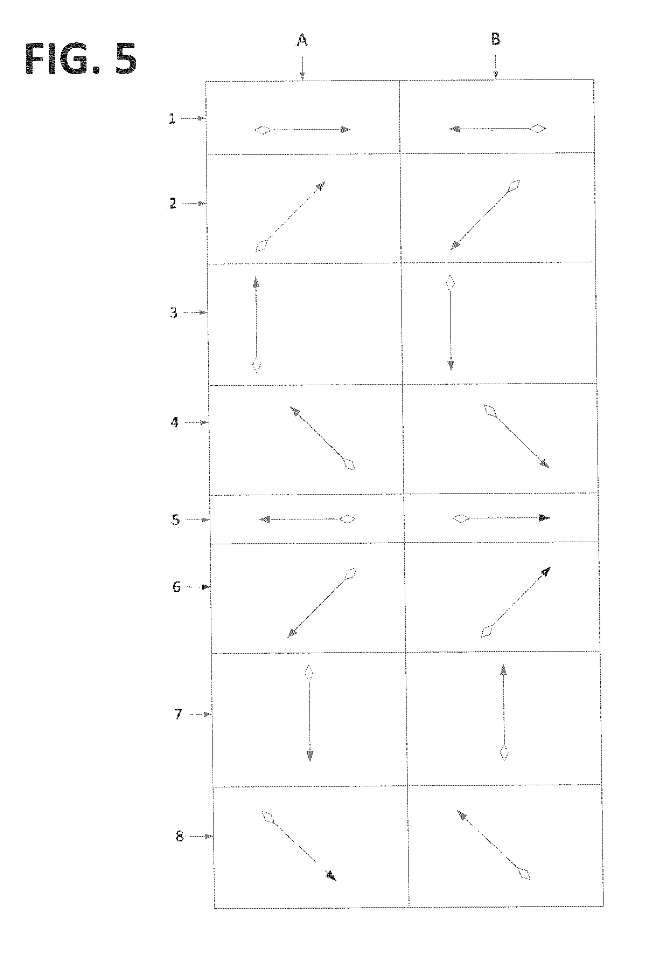

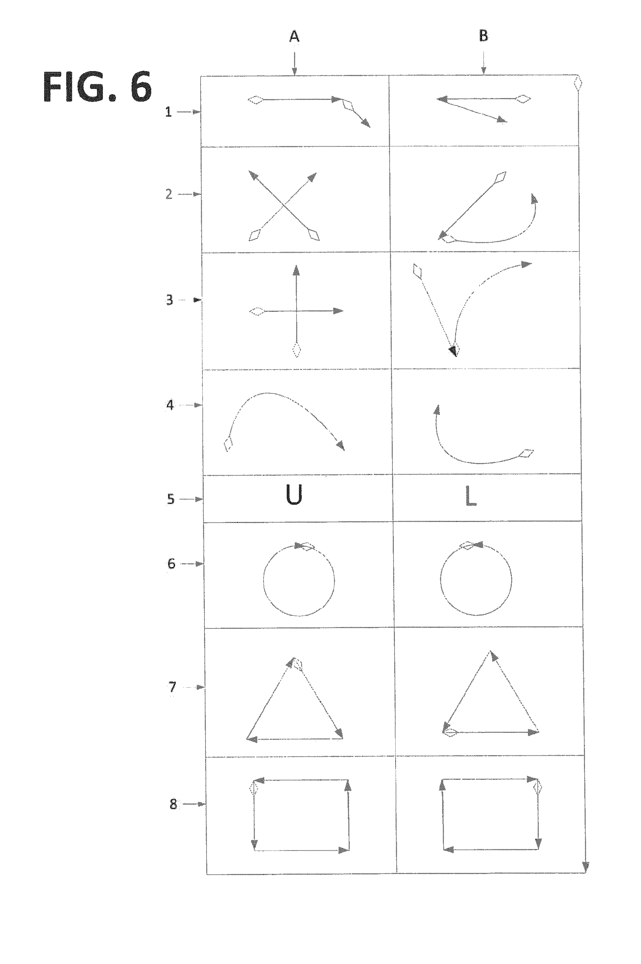

Fig. 4A illustrates an example of a right swipe for indicating that a traffic directing light should enter a mode to direct traffic to the right and Fig. 4B illustrates an example of a left swipe for indicating that a traffic directing light should enter a mode to direct traffic to the left. Fig. 5 illustrates examples of straight line swipes, each of which may correspond to a different mode of operation. Fig. 6 illustrates examples of complex and/or multiple line swipes, each of which may correspond to a different mode of operation.

Each detected gesture corresponds to only one mode of operation of the electronic safety device 102. For some gestures and their corresponding mode of operation, a first gesture in one direction initiates a mode operation and a second gesture in reverse or in the opposite direction discontinues the mode of operation. Thus, a particular detected first gesture corresponding to a particular mode causes the controller 112 to implement the corresponding particular mode when the particular mode is not being implemented at a time when the first gesture is detected by the touch pad sensor 108. Also, the particular detected second gesture corresponding to the particular mode causes the controller 112 to discontinue implementing the corresponding particular mode when the particular mode is being implemented at a time when the second gesture is detected by the touch pad sensor 108. As a specific example, refer to Figs. 4A, 4B and 5. Assume a swipe right 402 (also shown at row A, column 1 of Fig. 5) on touch pad sensor 404 causes the controller 112 to turn ON a traffic directing light to be energized to present a light pattern which suggests that traffic move to the right. A subsequent a swipe left 406 on touch pad sensor 404 causes the controller 112 to turn OFF the traffic directing light to be de-energized so that no light pattern is presented by the traffic directing light.

Fig. 5 illustrates other examples of first and second gestures which would initiate and discontinue modes, respectively. As illustrated:

| FIRST GESTURE: | SECOND GESTURE: |
|---|---|
| Right upward diagonal 5B1 | Left diagonal downward 5B2 |
| Upward 5C1 | Downward 5C2 |
| Left upward diagonal 5D1 | Right downward diagonal 5D2 |
| Left swipe 5E1 | Right swipe 5E2 |
| Left downward diagonal 5F1 | Right upward diagonal 5F2 |
| Downward 5G1 | Upward 5G2 |
| Right downward diagonal 5H2 | Left upward diagonal 5H1 |

In the above examples, a gesture could have different meanings depending on the mode of operation at the time of the gesture. For example, if the traffic directing light is OFF, a right swipe initiates a right pattern and a left swipe initiates a left pattern. If the traffic directing light is ON providing a right pattern, a right swipe is ignored and a left swipe discontinues the right pattern. If the traffic directing light is ON providing a left pattern, a right swipe discontinues the left pattern and a left swipe is ignored.

The above examples are relatively simple, single gestures. More complex gestures or two or more gestures within a preset period of time (e.g., 1 second) could also be assigned a particular meaning or mode of operation. Fig. 6 illustrates some examples of more complex gestures including multiple straight line gestures 6A1, 6A2; overlapping gestures 6B1, 6C1; a combination of straight and curved gestures 6A2, 6C2; curved gestures 6D1, 6D2; circles 6F1, 6F2; triangles 6G1, 6G2; and rectangles 6H1, 6H2. It is also contemplated that the gestures may be one or more letters. For example, the letter U at 6E1 could mean unlock and the letter L at 6E2 could mean lock.

It is also contemplated that a gesture could be an overriding gesture which is always implemented independent of mode of operation the system at the time of the gesture. For example, a right swipe 5A1 would always mean that a traffic directing light would provide a right pattern and a left swipe 5A1 would always mean that a traffic directing light would provide a left pattern. Thus, if the traffic directing light is providing a right pattern and the touch pad sensor 108 detects a left swipe, the controller 112 overrides the right pattern and changes the traffic directing light to a left pattern. In this example a different gesture (e.g., up or down swipe) would turn off the traffic directing light.

The direction of the swipe (e.g., left, right, up, down, clockwise, counter-clockwise) is important and the same swipe in different directions would usually have a different meaning. Swipe and hold gestures are also contemplated. Single or multiple taps can also be assigned a particular meaning and mode. As shown in Fig. 3, the number of fingers used to tap can be assigned different meanings.

Gestures can also be used for programming the controller 112. Thus, it is contemplated that the touch pad sensor 108 is configured to receive operational gestures for controlling the mode of operation of the electronic safety device 102 and configured to receive program gestures for programming a functionality of the controller 112. For example, the program gestures include a reset gesture for resetting the system 100 to a particular mode or default. Also, a password gesture can be defined for activating and deactivating the controller 112. In general, since the touch pad sensor 108 is an input device, any input that would be provided via a control head to an electronic safety device can be assigned a gesture. Even without a password, only trained operators would be able to use the system and method because untrained operators would not know the necessary gestures needed.

It is also contemplated that a control head may have two or more touch pads. For example, one touch pad may be used to control a light bar, a second touch pad could be used to control a siren and/or a third touch pad may be used to control some other feature or accessory of the vehicle.

Examples of various modes of operation of light bars and sirens which could be assigned a gesture include but are not limited to:
LEFT ARROW
RIGHT ARROW
CENTER OUT ARROW
LEVEL 1
LEVEL 2
LEVEL 3
TAKEDOWN LIGHTS
ALLEY LIGHTS
CRUISE LIGHTS
WAIL
YELP
MANUAL
GUN LOCK
DOOR LOCKS
K9 DOOR
TRUNK
IGNITION ELEMENT

In one form, it is also contemplated that the system 100 is configured to control intensity such as brightness of a lighting device or a volume of an electronic safety device. For example, gestures applied to the touch pad controller 114 may be programmed to set the dimming (brightness) of a scene light. By sliding a finger along the touch pad sensor 108 and/or tapping the sensor 108, a scene light may be turned off completely, and/or its intensity adjusted from dim to full brilliance, or vice versa. A certain gesture such as a double or triple tapping of a certain number of fingers on the sensor 108 before sliding the finger on the sensor 108 would instruct the system 100 that the sliding gesture following the tapping is for controlling intensity of the scene light. Similarly, the system 100 could also be used as part of a siren controller to set the audio volume level of the siren, for controlling the PA and its volume and/or for controlling a radio rebroadcast feature and its volume. As a specific example, a system in one form would include an external scene light where the human interface is in the form of a gesture controller. In this example, a scene light would be a tripod mounted, battery operated light carried in a vehicle or by a person and deployed on the ground as needed for safety incidents and/or construction work.

Optionally, the controller 112 has a program port 132 configured to interface with an external device 130 for programming the control signals to be provided by the controller 112 to the electronic safety device 102 and/or for programming the control signals which correspond to the detected gestures. For example, the program port 132 can be a wired or wireless port for communicating with at least one of a computer, a phone and a switch.

One advantage of a touch pad system and method is that the system is easier, faster and safer to operate than existing control heads because the operator does not need to make visual contact with the touch pad system. Using a touch pad becomes more intuitive to the operator. In some forms, the touch pad system has no moving parts. The touch pad system is also more reliable and can easily be configured to be rugged and water resistant. It is contemplated that the system may be used in combination with a stylus or other devices handled by an operator such as gloves or other finger coverings which can be detected by a touch pad when contacting the touch pad.

The Abstract and summary are provided to help the reader quickly ascertain the nature of the technical disclosure. They are submitted with the understanding that they will not be used to interpret or limit the scope or meaning of the claims. The summary is provided to introduce a selection of concepts in simplified form that are further described in the Detailed Description. The summary is not intended to identify key features or essential features of the claimed subject matter, nor is it intended to be used as an aid in determining the claimed subject matter.

For purposes of illustration, programs and other executable program components, such as the operating system, are illustrated herein as discrete blocks. It is recognized, however, that such programs and components reside at various times in different storage components of a computing device, and are executed by a data processor(s) of the device.

Although described in connection with an exemplary computing system environment, embodiments of the aspects of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well-known computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the invention may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the invention may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments of the aspects of the invention may be implemented with processor-executable instructions. The processor-executable instructions may be organized into one or more processor-executable components or modules on a tangible processor readable storage medium. Aspects of the invention may be implemented with any number and organization of such components or modules. For example, aspects of the invention are not limited to the specific processor-executable instructions or the specific components or modules illustrated in the figures and described herein. Other embodiments of the aspects of the invention may include different processor-executable instructions or components having more or less functionality than illustrated and described herein.

The order of execution or performance of the operations in embodiments of the aspects of the invention illustrated and described herein is not essential, unless otherwise specified. That is, the operations may be performed in any order, unless otherwise specified, and embodiments of the aspects of the invention may include additional or fewer operations than those disclosed herein. For example, it is contemplated that executing or performing a particular operation before, contemporaneously with, or after another operation is within the scope of aspects of the invention.

When introducing elements of aspects of the invention or the embodiments thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that several advantages of the aspects of the invention are achieved and other advantageous results attained.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively or in addition, a component may be implemented by several components.

The above description illustrates the aspects of the invention by way of example and not by way of limitation. This description enables one skilled in the art to make and use the aspects of the invention, and describes several embodiments, adaptations, variations, alternatives and uses of the aspects of the invention, including what is presently believed to be the best mode of carrying out the aspects of the invention. Additionally, it is to be understood that the aspects of the invention is not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

Having described aspects of the invention in detail, it will be apparent that modifications and variations are possible without departing from the scope of aspects of the invention as defined in the appended claims. It is contemplated that various changes could be made in the above constructions, products, and methods without departing from the scope of aspects of the invention. In the preceding specification, various preferred embodiments have been described with reference to the accompanying drawings. It will, however, be evident that various modifications and changes may be made thereto, and additional embodiments may be implemented, without departing from the broader scope of the aspects of the invention as set forth in the claims that follow. The specification and drawings are accordingly to be regarded in an illustrative rather than restrictive sense.

The invention may be described with reference to the following clauses:
1. A system for use by an operator comprising:
   an electronic safety device having a control port configured to receive control signals to control a mode of operation of the electronic safety device;
   a gesture detecting device configured to detect a gesture by the operator and configured to provide a signal corresponding to the detected gesture; and
   a control configured to receive the signal and configured to provide a corresponding control signal to be applied to the control port of the electronic safety device to control a mode of operation of the electronic safety device.
2. The system of clause 1 wherein:
   the electronic safety device comprises an emergency warning device;
   the gesture detecting device comprises a touch pad sensor configured for use by the operator, said touch pad sensor configured to detect gestures of the operator and configured to provide a gesture signal indicative of a detected gesture, the detected gesture corresponding to a mode of operation of the emergency warning device; and
   the control comprises a controller configured to detect the gesture signals indicative of the detected gesture, the controller configured to convert the gesture signals into the control signals to control the operation of the emergency warning device, the control signals for implementing the mode of operation corresponding to the detected gesture.
3. The system of clause 2 wherein the controller comprises:
   a touch pad controller configured to detect the gesture signals and configured to convert the gesture signals into output signals indicative of the detected gesture; and
   a processor configured to receive the output signals and configured to convert the output signals into the control signals to control the operation of emergency warning device.
4. The system of clause 2 wherein the emergency warning device comprises at least one of a light bar and a siren.
5. The system of clause 2 wherein the emergency warning device includes a processor having the control port configured to receive digital signals to control the mode of operation of the emergency warning device, wherein controller has an output port for providing the control signals, and wherein the output port of the controller is configured to be connected to the control port of the processor.
6. The system of clause 2 further comprising at least one of:
   a display responsive to the controller and configured to indicate a current status of the emergency warning device;
   a control element connected to the controller and configured to control the emergency warning device; and
   a feedback device connected to the controller and configured to provide an indication to the operator in response to the detected gesture.
7. The system of clause 6 including the display wherein the display comprises at least one of:
   a head up display configured to project an image on a surface of a vehicle to indicate the current status of the emergency warning device;
   an alpha-numeric display configured to present alpha-numeric characters indicating a current status of the emergency warning device;
   a graphical display configured to present a graphic illustrating the current status of the emergency warning device; and
   a light source configured to indicate the current status of the emergency warning device.
8. The system of clause 7 including the light source wherein the light source provides an indication of a level of urgency of the present mode of operation of the emergency warning device.
9. The system of clause 6 including the control element wherein the control element comprises at least one of:
   a toggle switch configured to control the emergency warning device;
   a button configured to control the emergency warning device;
   a switch configured to control the emergency warning device; and
   a rotatable element configured to control the emergency warning device.
10. The system of clause 6 including the feedback device wherein the feedback device comprises at least one of an audible sound generator, a visual signal generator and a tactile signal generator.
11. The system of clause 6 including the audible sound generator wherein the audible sound generator comprises at least one of:
   a speaker configured to generate sounds indicative of the detected gestures
   wherein different gestures correspond to different sounds;
   a solenoid configured to generate a sound indicative of the detected gesture; and
   a voice generator configured to provide an audible voice indicative of the mode of operation corresponding to each detected gesture.
12. The system of clause 6 including the visual signal generator wherein the visual signal generator comprises at least one of:
   a head up display projected on a surface of a vehicle configured to generating a display indicative of the detected gesture wherein different gestures correspond to different displays;
   an alpha-numeric display configured to generate an alpha-numeric display indicative of the detected gesture wherein different gestures correspond to different alpha-numeric displays;
   a graphical display configured to provide a graphic indicative of the detected gesture wherein different gestures correspond to different graphics; and
   a light source selectively configured to generate a light signal indicative of the detected gesture wherein different gestures correspond to different light signals.
13. The system of clause 6 including a tactile signal generator wherein the tactile signal generator comprises at least one of:
   a solenoid configured to generate a movement palpable on the touch pad and indicative of the detected gesture; and
   a vibrating device configured to generate a vibration palpable on the touch pad and indicative of the detected gesture.
14. The system of clause 2 wherein the emergency warning device comprises a light bar and a siren, and further comprising a panel including the touch pad sensor, a first display to indicate of a mode of operation of the light bar, and a second display to indicate a mode of operation of the siren.
15. The system of clause 14 wherein the emergency warning device includes a traffic directing device and wherein the panel includes a third display to indicate the current status of the traffic directing device.
16. The system of clause 15 wherein the panel includes a fourth display indicative of a level of urgency of the mode of operation of the light bar and siren.
17. The system of clause 2:
   wherein each detected gesture corresponds to only one mode of operation of the emergency warning device; and
   wherein a particular detected gesture corresponding to a particular mode causes the controller to implement the corresponding particular mode when the particular mode is not being implemented at a time when the gesture is detected by the touch pad sensor; and
   wherein the particular detected gesture corresponding to the particular mode causes the controller to discontinue implementing the corresponding particular mode when the particular mode is being implemented at a time when the gesture is detected by the touch pad sensor.
18. The system of clause 2 wherein the system is configured to be connected to a vehicle device of a vehicle to control the vehicle device and wherein the controller is configured to detect the gesture signals and configured to convert the gesture signals into control signals to control the operation of the vehicle device, the control signals for implementing a mode of operation of the vehicle device which corresponds to the detected gesture.
19. The system of clause 18 wherein the vehicle device is at least one of:
   a lock; a light; an ignition element; and an accessory.
20. The system of clause 2 wherein the controller has a program port configured to interface with an external device for programming the control signals to be provided by the controller to the emergency warning device or for programming the control signals which correspond to the detected gestures.
21. The system of clause 2 wherein the touch pad sensor is configured to receive operational gestures to control the mode of operation of the emergency warning device and configured to receive program gestures for programming a functionality of the controller.
22. The system of clause 2 wherein the program gestures include a reset gesture to reset the system to a particular mode or a password gesture to activate and deactivate the controller.
23. The system of clause 1 wherein:
   the electronic safety device comprises a lighting device;
   the gesture detecting device comprises a touch pad sensor configured for use by the operator, said touch pad sensor configured to detect gestures of the operator and configured to provide a gesture signal indicative of a detected gesture, the detected gesture corresponding to a lighting intensity of the lighting device; and
   the control comprises a controller configured to detect the gesture signals indicative of the detected gesture, the controller configured to convert the gesture signals into the control signals to control the lighting intensity of the lighting device, the control signals for implementing the lighting intensity corresponding to the detected gesture.
24. The system of clause 23 wherein the lighting device comprises at least one of emergency lighting, an emergency warning light, a light bar, area lighting and a scene light.
25. The system of clause 1 wherein:
   the electronic safety device comprises an audio device;
   the gesture detecting device comprises a touch pad sensor configured for use by the operator, said touch pad sensor configured to detect gestures of the operator and configured to provide a gesture signal indicative of a detected gesture, the detected gesture corresponding to a volume of the audio device; and
   the control comprises a controller configured to detect the gesture signals indicative of the detected gesture, the controller configured to convert the gesture signals into the control signals to control the volume of the audio device, the control signals for implementing the volume corresponding to the detected gesture.
26. The system of clause 25 wherein the audio device comprises at least one of a warning sound generator, an emergency sound generator, a siren and a public address system.
27. The system of clause 1 further comprising a physical element used by the operator to contact the gesture detecting device and provide the gesture, wherein the physical element comprises a glove or a stylus.
28. A system for use by an operator to control an electronic safety device having a control port, the system comprising:
   A gesture detecting device configured to detect a gesture from the operator and configured to provide a signal corresponding to the gesture; and
   A controller configured to detect the signal and configured to provide a corresponding control signal to be applied to the control port of the electronic safety device to control a mode of operation of the electronic safety device.
29. The system of clause 28 wherein:
   the electronic safety device comprises an emergency warning device;
   the gesture detecting device comprises a touch pad sensor configured for use by the operator, said touch pad sensor configured to detect gestures of the operator and configured to provide a gesture signal indicative of a detected gesture, the detected gesture corresponding to a mode of operation of the emergency warning device; and
   the control comprises a controller configured to detect the gesture signals indicative of the detected gesture, the controller configured to convert the gesture signals into the control signals to control the operation of the emergency warning device, the control signals for implementing the mode of operation corresponding to the detected gesture.
30. The system of clause 29 wherein the controller comprises:
   a touch pad controller configured to detect the gesture signals and configured to convert the gesture signals into output signals indicative of the detected gesture; and
   a processor configured to receive the output signals and configured to convert the output signals into the control signals to control the operation of emergency warning device.
31. The system of clause 29 further comprising at least one of:
   a display responsive to the controller and configured to indicate a current status of the emergency warning device;
   a control element connected to the controller and configured to control the emergency warning device; and
   a feedback device connected to the controller and configured to provide an indication to the operator in response to the detected gesture.
32. The system of clause 29 wherein the emergency warning device comprises a light bar and a siren, and further comprising a panel including the touch pad sensor, a first display to indicate of a mode of operation of the light bar, and a second display to indicate a mode of operation of the siren.
33. The system of clause 29:
   wherein each detected gesture corresponds to only one mode of operation of the emergency warning device; and
   wherein a particular detected gesture corresponding to a particular mode causes the controller to implement the corresponding particular mode when the particular mode is not being implemented at a time when the gesture is detected by the touch pad sensor; and
   wherein the particular detected gesture corresponding to the particular mode causes the controller to discontinue implementing the corresponding particular mode when the particular mode is being implemented at a time when the gesture is detected by the touch pad sensor.
34. The system of clause 29 wherein the system is configured to be connected to a vehicle device of a vehicle to control the vehicle device and wherein the controller is configured to detect the gesture signals and configured to convert the gesture signals into control signals to control the operation of the vehicle device, the control signals for implementing a mode of operation of the vehicle device which corresponds to the detected gesture.
35. The system of clause 29 wherein the controller has a program port configured to interface with an external device for programming the control signals to be provided by the controller to the emergency warning device or for programming the control signals which correspond to the detected gestures.
36. The system of clause 29 wherein the touch pad sensor is configured to receive operational gestures to control the mode of operation of the emergency warning device and configured to receive program gestures for programming a functionality of the controller.
37. The system of clause 29 wherein the program gestures include a reset gesture to reset the system to a particular mode or a password gesture to activate and deactivate the controller.
38. The system of clause 28 wherein:
   the electronic safety device comprises a lighting device;
   the gesture detecting device comprises a touch pad sensor configured for use by the operator, said touch pad sensor configured to detect gestures of the operator and configured to provide a gesture signal indicative of a detected gesture, the detected gesture corresponding to a lighting intensity of the lighting device; and
   the control comprises a controller configured to detect the gesture signals indicative of the detected gesture, the controller configured to convert the gesture signals into the control signals to control the lighting intensity of the lighting device, the control signals for implementing the lighting intensity corresponding to the detected gesture.
39. The system of clause 38 wherein the lighting device comprises at least one of emergency lighting, an emergency warning light, a light bar, area lighting and a scene light.
40. The system of clause 28 wherein:
   the electronic safety device comprises an audio device;
   the gesture detecting device comprises a touch pad sensor configured for use by the operator, said touch pad sensor configured to detect gestures of the operator and configured to provide a gesture signal indicative of a detected gesture, the detected gesture corresponding to a volume of the audio device; and
   the control comprises a controller configured to detect the gesture signals indicative of the detected gesture, the controller configured to convert the gesture signals into the control signals to control the volume of the audio device, the control signals for implementing the volume corresponding to the detected gesture.
41. The system of clause 40 wherein the audio device comprises at least one of a warning sound generator, an emergency sound generator, a siren and a public address system.
42. The system of clause 28 further comprising a physical element used by the operator to contact the gesture detecting device and provide the gesture, wherein the physical element comprises a glove or a stylus.
43. A method for use by an operator to control an electronic safety device having a control port, the method comprising:
   detecting a gesture from the operator;
   providing a signal corresponding to the gesture; and
   detecting the signal;
   providing a corresponding control signal to be applied to the control port of the electronic safety device to control a mode of operation of the electronic safety device.

## Claims

1. A system for use by an operator comprising:
an electronic safety device having a control port configured to receive control signals to control a mode of operation of the electronic safety device;
a gesture detecting device configured to detect a gesture by the operator and configured to provide a signal corresponding to the detected gesture; and
a control configured to receive the signal and configured to provide a corresponding control signal to be applied to the control port of the electronic safety device to control a mode of operation of the electronic safety device.

2. The system of claim 1 wherein:
the electronic safety device comprises an emergency warning device;
the gesture detecting device comprises a touch pad sensor configured for use by the operator, said touch pad sensor configured to detect gestures of the operator and configured to provide a gesture signal indicative of a detected gesture, the detected gesture corresponding to a mode of operation of the emergency warning device; and
the control comprises a controller configured to detect the gesture signals indicative of the detected gesture, the controller configured to convert the gesture signals into the control signals to control the operation of the emergency warning device, the control signals for implementing the mode of operation corresponding to the detected gesture.

3. The system of claim 2 wherein the controller comprises at least one of:
a touch pad controller configured to detect the gesture signals and configured to convert the gesture signals into output signals indicative of the detected gesture; and a processor configured to receive the output signals and configured to convert the output signals into the control signals to control the operation of emergency warning device;
wherein the emergency warning device comprises at least one of a light bar and a siren; and
wherein the emergency warning device includes a processor having the control port configured to receive digital signals to control the mode of operation of the emergency warning device, wherein controller has an output port for providing the control signals, and wherein the output port of the controller is configured to be connected to the control port of the processor.

4. The system of claim 2 or 3 further comprising at least one of:
a display responsive to the controller and configured to indicate a current status of the emergency warning device;
a control element connected to the controller and configured to control the emergency warning device; and
a feedback device connected to the controller and configured to provide an indication to the operator in response to the detected gesture.

5. The system of claim 4 including a display wherein the display comprises at least one of:
a head up display configured to project an image on a surface of a vehicle to indicate the current status of the emergency warning device;
an alpha-numeric display configured to present alpha-numeric characters indicating a current status of the emergency warning device;
a graphical display configured to present a graphic illustrating the current status of the emergency warning device;
a light source configured to indicate the current status of the emergency warning device; and
a light source configured to provide an indication of a level of urgency of the present mode of operation of the emergency warning device.

6. The system of claim 4 including a control element, wherein the control element comprises at least one of:
a toggle switch configured to control the emergency warning device;
a button configured to control the emergency warning device;
a switch configured to control the emergency warning device;
a rotatable element configured to control the emergency warning device;
and including a feedback device comprises at least one of an audible sound generator, a visual signal generator and a tactile signal generator; and including a audible sound generator wherein the audible sound generator comprises at least one of:
a speaker configured to generate sounds indicative of the detected gestures wherein different gestures correspond to different sounds;
a solenoid configured to generate a sound indicative of the detected gesture; and
a voice generator configured to provide an audible voice indicative of the mode of operation corresponding to each detected gesture.

7. The system of claim 4 including a visual signal generator wherein the visual signal generator comprises at least one of:
a head up display projected on a surface of a vehicle configured to generating a display indicative of the detected gesture wherein different gestures correspond to different displays;
an alpha-numeric display configured to generate an alpha-numeric display indicative of the detected gesture wherein different gestures correspond to different alpha-numeric displays;
a graphical display configured to provide a graphic indicative of the detected gesture wherein different gestures correspond to different graphics; and
a light source selectively configured to generate a light signal indicative of the detected gesture wherein different gestures correspond to different
light signals;
or including a tactile signal generator wherein the tactile signal generator comprises at least one of:
a solenoid configured to generate a movement palpable on the touch pad and indicative of the detected gesture; and
a vibrating device configured to generate a vibration palpable on the touch pad and indicative of the detected gesture.

8. The system of any one of claims 1 to 7 wherein the emergency warning device comprises a light bar and a siren, and further comprising a panel including a touch pad sensor, a first display to indicate of a mode of operation of the light bar, and a second display to indicate a mode of operation of the siren, wherein the emergency warning device includes a traffic directing device and wherein the panel includes a third display to indicate the current status of the traffic directing device and wherein the panel includes a fourth display indicative of a level of urgency of the mode of operation of the light bar and siren.

9. The system of claim 2 wherein each detected gesture corresponds to only one mode of operation of the emergency warning device; and
wherein a particular detected gesture corresponding to a particular mode causes the controller to implement the corresponding particular mode when the particular mode is not being implemented at a time when the gesture is detected by the touch pad sensor; and wherein the particular detected gesture corresponding to the particular mode causes the controller to discontinue implementing the corresponding particular mode when the particular mode is being implemented at a time when the gesture is detected by the touch pad sensor.

10. The system of claim 2 wherein the system is configured to be connected to a vehicle device of a vehicle to control the vehicle device and wherein the controller is configured to detect the gesture signals and configured to convert the gesture signals into control signals to control the operation of the vehicle device, the control signals for implementing a mode of operation of the vehicle device which corresponds to the detected gesture; and wherein the vehicle device is at least one of: a lock; a light; an ignition element; and an accessory.

11. The system of claim 2 including at least one of the following:
wherein the controller has a program port configured to interface with an external device for programming the control signals to be provided by the controller to the emergency warning device or for programming the control signals which correspond to the detected gestures;
wherein the touch pad sensor is configured to receive operational gestures to control the mode of operation of the emergency warning device and configured to receive program gestures for programming a functionality of the controller; and
wherein the program gestures include a reset gesture to reset the system to a particular mode or a password gesture to activate and deactivate the controller.

12. The system of claim 1 wherein:
the electronic safety device comprises a lighting device;
the gesture detecting device comprises a touch pad sensor configured for use by the operator, said touch pad sensor configured to detect gestures of the operator and configured to provide a gesture signal indicative of a detected gesture, the detected gesture corresponding to a lighting intensity of the lighting device; and
the control comprises a controller configured to detect the gesture signals indicative of the detected gesture, the controller configured to convert the gesture signals into the control signals to control the lighting intensity of the lighting device, the control signals for implementing the lighting intensity corresponding to the detected gesture;
wherein the lighting device comprises at least one of emergency lighting, an emergency warning light, a light bar, area lighting and a scene light.

13. The system of claim 1 wherein:
the electronic safety device comprises an audio device;
the gesture detecting device comprises a touch pad sensor configured for use by the operator, said touch pad sensor configured to detect gestures of the operator and configured to provide a gesture signal indicative of a detected gesture, the detected gesture corresponding to a volume of the audio device; and
the control comprises a controller configured to detect the gesture signals indicative of the detected gesture, the controller configured to convert the gesture signals into the control signals to control the volume of the audio device, the control signals for implementing the volume corresponding to the detected gesture;
wherein the audio device comprises at least one of a warning sound generator, an emergency sound generator, a siren and a public address system, and further comprising a physical element used by the operator to contact the gesture detecting device and provide the gesture, wherein the physical element comprises a glove or a stylus.

14. A method for use by an operator to control an electronic safety device having a control port, the method comprising:
detecting a gesture from the operator;
providing a signal corresponding to the gesture; and
detecting the signal;
providing a corresponding control signal to be applied to the control port of the electronic safety device to control a mode of operation of the electronic safety device.
